# EUROPEAN PATENT SPECIFICATION

(11) **EP 3 969 270 B1**
(45) Date of publication and mention of the grant of the patent: **10.01.2024**
(21) Application number: 19894389.6
(22) Date of filing: 09.07.2019
(51) Int. Cl.: B31B 70/00, B29C 65/62

(54) **PRODUCTION SYSTEM AND METHOD OF FABRIC BAG WITH GARMENT SEWING**
HERSTELLUNGSSYSTEM UND -VERFAHREN FÜR EINEN STOFFBEUTEL DURCH KLEIDUNGSNÄHEN
SYSTÈME ET PROCÉDÉ DE PRODUCTION D'UN SAC EN TISSU À L'AIDE DE COUTURES FAÇON CONFECTION

(30) Priority: 13.05.2019 TR 201907183
(43) Date of publication of application: 23.03.2022
(73) Proprietor: Netpak Ambalaj Sanayi Ticaret Anonim Sirketi, Esenyurt/Istanbul (TR)
(72) Inventor: AVCI, Ali, Esenyurt/Istanbul (TR)
(74) Representative: Yamankaradeniz, Kemal
(86) International application number: PCT/TR2019/050549
(87) International publication number: WO 2020/231358

(56) References cited:
- WO-A2-2018/070970
- DE-B- 1 290 419
- US-A- 2 313 433
- US-A- 3 850 724
- US-A1- 2014 023 296

## Description

### Technical Field

The invention relates to the production of bags made of polyethylene (PE) and polypropylene (PP), woven or non-woven fabrics, technical or non-technical fabrics, raw clothing and other different fabrics.

In particular, the invention relates to a garment-sewn automated production system and method for all fabrics which can or cannot be combined by a different combining method, which enables a high reduction of wastes in bag or sack manufacturing.

### Present State of the Art

Plastic carrying bags and sacks, plastic pochettes in other words, have been used in many different sectors for many years and are consumed in very high quantities. While the time required for the deterioration of the plastic pochettes with a occupancy of 12-15 minutes per day is 400 to 1000 years at sea, 800 to 1000 years on land. During this deterioration, all the harmful materials contained in it pass into the soil and water. Plastic pochettes must therefore be disposed. During the disposal of plastic pochettes, many harmful gases are released and this situation causes harm to the environment as well as the use of pochettes. In addition, transparent ones of these disposed pochettes absorb the heat by causing greenhouse effect and cause forest fires. Under the influence of light, plastic pochettes turn into more toxic small petro-polymers. This causes many generations to be negatively affected.

In addition to all these, plastic pochettes left to nature cause the animals to try to consume them thinking as food and cause their death due to disruption of the digestive systems and cause the ecological balance to be disrupted. It is also known that especially black plastic pochettes are obtained from garbage and thus are more harmful. Black pochettes are offered to consumers by separating materials such as buckets, pet bottles and medical waste from the garbage and staining them to black to hide their defects.

Because of the widespread use of plastic pochettes and their harm to human and environment are known, bags and sacks made of recyclable materials and textile fabrics that protect the environment and support sustainable production are now used. Recycling can mainly be explained by bringing the recyclable wastes out of use to production as raw materials by various methods. By providing recycling, raw material needs can be reduced, harm to nature and human health is prevented and consumption can be balanced. In addition, the use of recyclable materials as raw materials contributes to the limited consumption of consumable energy resources by saving energy. The recycling process is also of great importance for the prevention of environmental pollution.

Today, as an alternative to plastic carrying bags and sacks for supporting recycling, protecting the environment and sustainable production, bags and sacks obtained from non-woven technical fabrics or textile surfaces are used. The use of non-woven technical fabrics such as bags and sacks is becoming increasingly common. Garment sewing products are widely used in the production of bags and sacks made of non-woven technical fabric and the production of this type of products is mostly achieved by manual processes. In this direction, the pieces are cut from the fabric from which the bag will be manufactured according to the desired bag size in the dimensions determined by the molds and these pieces are sewn manually in the garment sewing machines. Then, the handles are also adapted to the bag by hand sewing or by machine with garment sewing. Therefore, a production performed in this way creates a waste of time, increases production costs and can affect the quality standard according to the skill of the person performing the garment sewing process due to the resulting high rate of wastes.

In order to provide production without wastage and to realize faster production by reducing production costs, the automated manufacturing system mentioned in the application No 2016/14354 can be mentioned. This manufacturing system basically refers to a manufacturing system in which fabrics are combined by ultrasonic welding technique. Although the manufacturing system provides an increase in production speeds by minimizing the formation of wastes, it does not have a suitable structure for combining with garment sewing.

In literature as a current technique method for the production of plastic carrier bags with over the bag walls and the bottom extending, loop-shaped protruding, closed plastic handle strips mentioned in the application numbered DE1290419B can be mentioned. While DE1290419B provides a bag manufacturing method, it does not provide method which enables the production of bag products produced by machine sewing or hand sewing through an automation.

Another application numbered US20140023296A1 relates to nonwoven fabric bags with handles that can be manufactured with reduced labor and cost for manufacturing, and that are less likely to break even if a bulky or heavy item is placed therein. But application US20140023296A1 does not include production method of these bags.

Application number WO2018070970A2 relates to automated manufacture system for bags of bellow free structure wherein polypropylene, polyethylene, non-woven fabrics are joined by ultrasonic welding method. Although ultrasound welded automated manufacture system provides to use less material and minimizing the wastes occurring in bag manufacturing, it does not have a suitable structure for combining with garment sewing. As a result, due to the above-mentioned negativities and the inadequacy of the existing solutions on the issue, a development in the related technical field was required.

### Brief Description of the Invention

The present invention relates to a production system and method with garment sewing and automation of obtaining a carrying bag from woven or non-woven, technical or non-technical fabrics, raw clothing or other fabrics made of polypropylene (PP) and polyethylene (PE) that meet the above-mentioned requirements, eliminate all disadvantages and bring some additional advantages.

The primary object of the present invention is to provide a bag manufacturing system and method which enables the production of bag products produced by machine sewing or hand sewing through an automation.

An object of the invention is to provide a production system and method which reduces the production time and costs of bag and sack manufacturing processes.

Another object of the invention is to provide the production of bags with garment sewing from all fabrics which can be combined or not combined by different combining technique. Another object of the invention is to provide a bag manufacturing system and method using garment sewing.

Another object of the invention is to provide a mass production system and method to produce standard quality products which enables non-standard production to be prevented.

A similar object of the invention to provide a production system and method that provides for improved process stability.

Another similar object of the invention is to provide a production system and method which enables the minimization of wastes during production.

In order to achieve the purposes disclosed above, the invention relates to a production system for the production of bags or sacks of woven or nonwoven, technical or non-technical fabrics made of polypropylene (PP) or polyethylene (PE). The present invention according to the invention comprises of an input unit where the fabric roll is placed, an edge folding and sewing station which allows the two sides of the fabric to be folded together with the garment sewing, the handle preparation and fitting station which enables the fitting of the carrying handles adjusted to the desired size to the bag with the garment sewing, the first sensing photocell and the first puller driving mechanism which determines the place to be fitted, the folding unit which makes the folding points clearer, the folding station which ensures the overlap of the two edges of the fabric, the length adjustment station where the length garment sewing point of the bag is adjusted, a sewing station for sewing one side of each of the two bags respectively with a garment sewing, a second puller drive mechanism, cutting station, transfer conveyor, which drives the bags sewn by the garment sewing to the cutting unit, a bellowing station in which the side bellows and the bottom bellows are opened according to the desired bag size in order to give the bag shaped and coming from the cutting unit to which the handles are combined to a triangular structure, triangular cutting and sewing station that cuts the paddles in the form of triangles formed in the lower two corners of the bag to form the bellows, a bellows folding station for folding inwardly from the side and bottom bellows surfaces of the formed bag and an ironing and stacking station through which the bags are conveyed to maintain the form of the resulting bag and reduce the volume during the stacking step.

The structural and characteristic features and all advantages of the invention will become more apparent from the following figures and the detailed description made with reference to these figures, and therefore the evaluation should be made considering these figures and detailed description.

### Figures to Help Understand the Invention

Figure 1 is a general schematic view of the production system according to the invention.

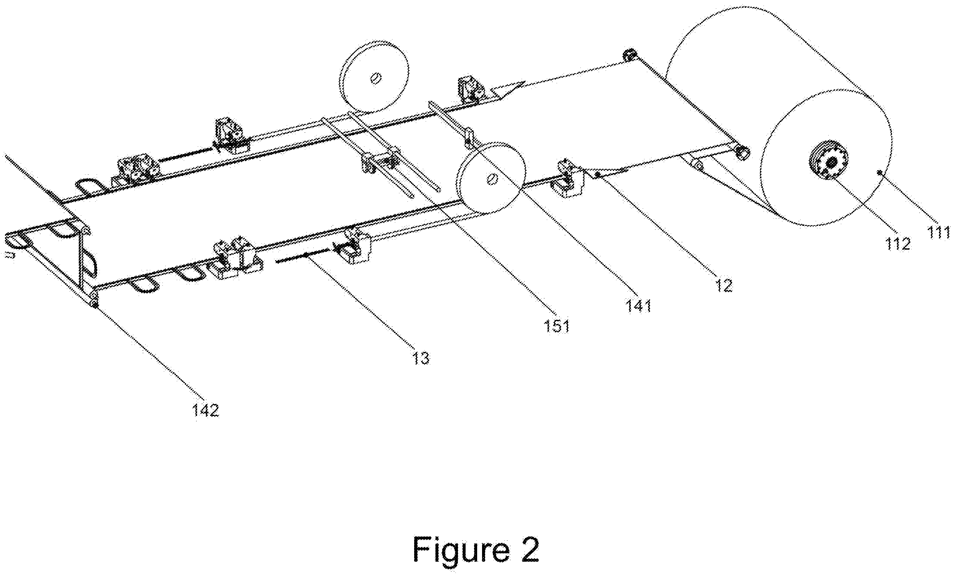

Figure 2 is a detailed view of the production system according to the invention.

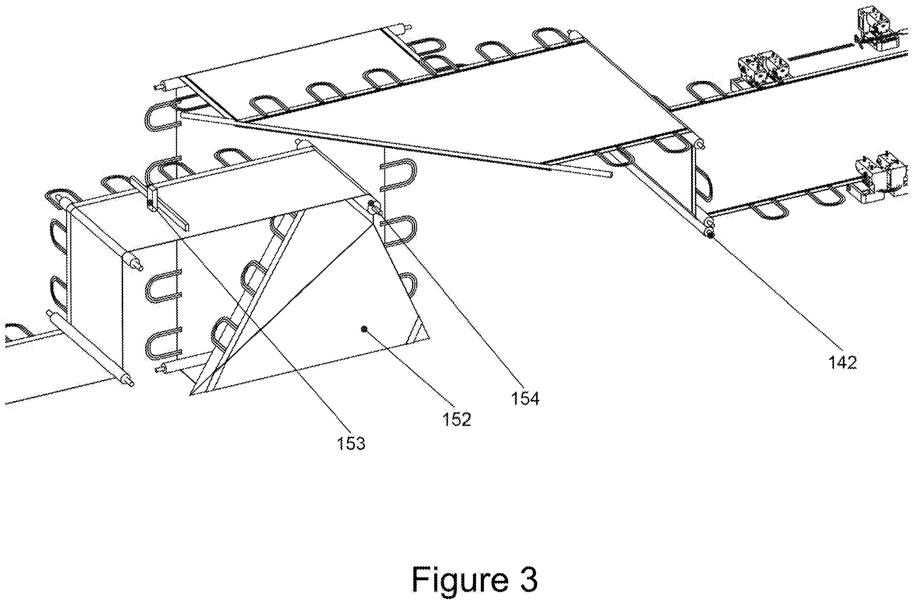

Figure 3 is another detailed view of the production system according to the invention.

The drawings do not necessarily have to be scaled and details which are not necessary to understand the present invention may be omitted. Over and above this, elements which are at least substantially identical or at least with substantially identical functions are designated by the same number.

### Description of References

10 Production System
   11 Input Unit
      111 Roll Loading Station
      112 Brake Mechanism
   12 Edge Folding and Sewing Station
   13 Handle Preparation and Fitting Station
   14 First Puller Drive Mechanism
      141 First Sensor Photocell
      142 First Carrier Mechanism
   15 Forming Unit
      151 Pleating Unit
      152 Folding Station
      153 Second Sensor Photocell
      154 Second Carrier Mechanism
   16 Length Sewing Station
   17 Second Puller Drive Mechanism
   18 Length Cutting Unit
   19 Transfer Conveyor
   20 Bellowing Station
   21 Triangle Cutting and Sewing Station
   22 Bellow Folding Station
   23 Ironing and Stacking Station

### Detailed Description of the Invention

In this detailed description, the bellow fabric bag production system (10) and method with the garment sewing of the present invention are explained only for a better understanding of the subject and with no limiting effect.

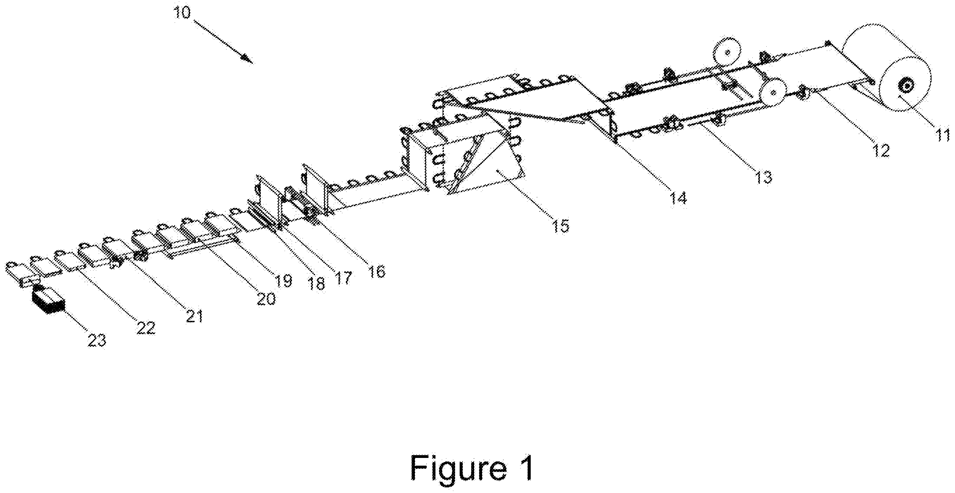

Referring to Fig. 1, the automation production system (10), which is schematically illustrated basically comprises of an input unit (11), an edge folding and sewing station (12) provided continuation of said input unit (11), a handle preparation and fitting station (13) provided behind said edge folding and sewing station (12), the first sensor photocell (141) and the first puller driving mechanism (14) located in the continuation of said handle preparation and fitting station (13), a forming unit (15) behind the first puller driving mechanism (14) and in the continuation of said forming unit (15) respectively a length sewing station (16), a second puller drive mechanism (17), a length cutting unit (18), a transfer conveyor (19), a bellowing station (20), a triangular cutting and sewing station (21), a bellow folding station (22), and an ironing and stacking station (23).

The said input unit (11) comprises a roll loading station (111) and a brake mechanism (112) provided in the continuation of said roll loading station (111). The First Puller Drive Mechanism (14) comprises a first sensor photocell (141) and a first carrier mechanism (142) provided in the continuation of said first sensor photocell (141). The forming unit (15) comprises a pleating unit (151), a folding station (152), a second sensor photocell (153) and a second carrier mechanism (154). A length adjuster unit is also provided within said length sewing station (16).

In the production system (10) according to the invention, the production of the bag or sack is initiated by placing the fabric that forming the bag in roll in the loading unit (111) in the input unit (11). The fabric in the fabric roll may also be woven or non-woven technical or non-technical fabrics, preferably made of polypropylene (PP) or polyethylene (PE). The fabric loaded in the roll loading station (111) is then directed to the edge folding and sewing station (12) by means of the brake mechanisms (112). The brake mechanisms (112) adjust the tension of the fabric to ensure that it is always fed at the same tension before entering the combining process with the garment sewing. At the edge folding and sewing station (12) there are sewing heads which perform the garment sewing. At the edge folding and sewing station (12), the edges of the fabric to be fitted to the handle are folded and combined with the garment sewing. In other words, the mouth sewing of the bag or sack with garment sewing is performed. The purpose of this is to ensure that the edges to be handled are secured. After the edge folding and sewing operations, it is provided to fit a handle on the folded edge. The first sensor photocell (141) is used to determine the position of the handles before the handles are fitted. Handle fitting is made with garment sewing with the sewing heads in the handle preparation and fitting station (13). The garment sewing is applied at this stage can be in the form of straight seam or cross seam. Handles can be fitted in desired lengths. Fitting of the handles is carried out when the fabric forming the bag is in the open state. After the handles are fitted to the folded edges by garment stitching, the fabric is pulled by the first puller drive mechanism (14) and transmitted to the forming unit (15).

The fabric which comes to the forming unit (15) is folded and the handles of which are fitted to the folded edges are first taken to the pleating unit (151) and folding traces are provided from the bag in accordance with the desired model (bellows etc.). Then, at the folding station (152), the two sides of the bag forming the mouth part are folded so as to overlap/to the brim. In the folding process performed at the folding station (152), the second sensor photocell (153) is used to bring the fabrics to the brim. Following the completion of the mouth folding process, the bag is guided to the length sewing station (16) by the rollers in the second carrier mechanism (154).

In the length sewing station (16), first of all, the position of the side garment sewing of the bag is set in the length adjuster unit (161). Then length sewing is done. Length sewing process is provided with sewing heads that perform garment sewing. The length of the bag is the distance from the mouth to the bottom, which means height of the bag. The bag, whose length sewing is also completed, proceeds to the length cutting unit (18) by means of the rollers in the second puller drive mechanism (17), where the cutting process of the bag is performed. Obtained bag is transferred to the transfer conveyor (19). The transfer conveyor (19) ensures that the bag exiting from the length cutting unit (18) is centered on said bellowing station (20). For this purpose, the transfer conveyor (19) is preferably servo-motor controlled.

There are holder tips and opener sleeves at bellowing station (20). The holder tips allow the bag to be opened from the mouth and hold the bag from the length junction of the bag in order to maintain the position of the bag during the bellowing process. Opener sleeves enter into the bag from the mouth of the bag. Opener sleeves are preferably positioned automatically with servo motor drive according to the size of the bag to be made. When entering into the bag, the opener sleeves in the closed position are opened with a scissor angle at the width of the bellows desired to be formed at the bottom of the bag moving both horizontally and vertically in the bag. Thus, triangular paddles are formed on the bottom of the bag and the bag becomes three-dimensional.

In the triangular cutting and sewing station (21), the paddles formed on the bottom of the bag are held in the position of the moving sewing unit and fixed by garment sewing while the opener sleeves are still in the open position and mechanically cut. At the triangular cutting and sewing station (21) there is a sewing head which applies garment sewing. The bag of which the paddles are cut comes to the bellow folding station (22). Here, the bag which the bellows are formed is folded into the interior of the bag by guides moving inwardly from the side and bottom bellow surfaces. Following the completion of the bellow folding process, the bags are directed to the ironing and stacking station (23) to maintain the form of the bag and to reduce its volume during the stacking step. At the ironing and stacking station (23), the bags are preferably passed between the press and heat applying rollers.

The production system (10) used in the production of bellow bags or sacks with garment sewing is operated and controlled by an automation system. Thus, the bag within the compass of the production system (10), can be obtained without leaving the production line and as a result of mass production. In addition to this, wastes occur during cut of sack or bag material or handle installation with manual garment processes are prevented. In addition, all of the processes are provided within the automation system, so that possible time losses can be avoided, production costs are reduced and standardization of all products is provided.

## Claims

1. A bag production system (10) with garment-sewing that comprises an inlet unit (11) in which a fabric roll for the production of bellow bags or sacks of woven or nonwoven, technical or non-technical fabrics, made of polypropylene (PP) and polyethylene (PE), is input;
an edge folding and sewing station (12) provided in the continuation of the input unit (11); a handle preparation and fitting station (13); a forming unit (15) where the bag is formed in accordance with the desired model; a length sewing station (16) where sewing is performed along a height of the bag, wherein the height of the bag means the distance from the mouth to the bottom; a length cutting unit (18); a bellowing station (20); a triangular cutting and sewing station (21) where paddles in the bottom of the bag, formed in the bellowing station (20), are fixed with garment-sewing and cut and an ironing and stacking station (23) to maintain the form of the bag and to reduce its volume during stacking; wherein the bag production system (10) comprises sewing heads which are operated and controlled by automation system for bag production system (10)
• at said edge folding and sewing station (12) to perform mouth seam of the bag,
• at said handle preparation and fitting station (13) to perform handle fitting seams,
• at said length sewing station (16) to perform side edge seams,
• and at said triangular cutting and sewing station (21) to form the bag base in order to realize garment-sewing.

2. A production method for the production of bellow bags or sacks of woven or nonwoven, technical or non-technical fabrics, made of polypropylene (PP) and polyethylene (PE), comprises the process steps of feeding the system by putting a fabric roll in an input unit (11), forming a fabric in a forming unit (15) by pulling fabric to obtain a desired length of bag or sack, forming side and bottom bellows to obtain the desired bag size in a bellowing station (20), forming the bag with heat and pressure in an ironing and stacking station (23) to maintain the bag's form and to facilitate stacking, the production method further comprising the process steps of
a) Sewing the bag mouth by applying garment-sewing at an edge folding and sewing station (12) in the continuation of the input unit (11),
b) Fitting a handle to the bag which mouth part is sewn with garment-sewing at a handle preparing and fitting station (13),
c) Combining the side edges of the bag exiting from the forming unit (15) at the length sewing station (16) with garment-sewing,
d) Forming the bottom of the bag exiting from the bellowing station (20) at a triangular cut and sewing station (21) where paddles in the bottom of the bag, formed in the bellowing station (20), are fixed with garment-sewing.

3. A production method according to claim 2, ***characterized in that*;** the garment-sewing of said step (b) is in the form of a straight seam or a cross seam.

4. A production method according to claim 2, ***characterized in that*;** the paddles in the bottom of the bag are mechanically cut after applying the garment-sewing in said step (d).

## Patentansprüche

1. Beutelproduktionssystem (10) durch Kleidungsnähen, das eine Einlasseinheit (11) umfasst, in die eine Stoffrolle für die Produktion von Balgbeuteln oder Säcken aus gewebten oder nicht gewebten, technischen oder nicht technischen Stoffen, gefertigt aus Polypropylen (PP) und Polyethylen (PE), eingegeben wird,
eine Kantenfalt- und Nähstation (12), die im Anschluss an die Eingabeeinheit (11) bereitgestellt ist; eine Griffvorbereitungs- und -anbringungsstation (13);
eine Formungseinheit (15), in der der Beutel gemäß dem gewünschten Modell geformt wird,
eine Längsnähstation (16), in der das Nähen entlang einer Höhe des Beutels ausgeführt wird, wobei die Höhe des Beutels den Abstand von der Öffnung zu dem Boden bedeutet;
eine Längsschneideeinheit; (18);
eine Balgbildungsstation (20);
eine dreieckige Schneide- und Nähstation (21), in der die in der Balgbildungsstation (20) geformten Polster im Boden des Beutels durch Kleidungsnähen und Schneiden befestigt werden, und eine Bügel- und Stapelstation (23), um die Form des Beutels beizubehalten und sein Volumen während des Stapelns zu verringern; wobei das Beutelproduktionssystem (10) Nähköpfe umfasst, die von einem Automatisierungssystem für Beutelproduktionssystem (10) bedient und gesteuert werden
• an der Kantenfalt- und Nähstation (12), um die Öffnungsnaht des Beutels auszuführen,
• an der Griffvorbereitungs- und -anbringungsstation (13), um Griffanbringungsnähte auszuführen,
• an der Längsnähstation (16), um Seitenkantennähte auszuführen,
• und an der dreieckigen Schneide- und Nähstation (21), um die Beutelbasis zu formen, um das Kleidungsnähen zu realisieren.

2. Produktionsverfahren zur Produktion von Balgbeuteln oder Säcken aus gewebten oder nicht gewebten, technischen oder nicht technischen Stoffen, gefertigt aus Polypropylen (PP) und Polyethylen (PE), umfasst die Prozessschritte Beschicken des Systems durch Einlegen einer Stoffrolle in eine Eingabeeinheit (11), Formen eines Stoffs in einer Formungseinheit (15) durch Ziehen des Stoffs, um eine gewünschte Länge des Beutels oder Sacks zu erlangen, Formen von Seiten- und Bodenbälgen, um die gewünschte Beutelgröße in einer Balgbildungsstation (20) zu erlangen, Formen des Beutels mit Hitze und Druck in einer Bügel- und Stapelstation (23), um die Form des Beutels beizubehalten und das Stapeln zu erleichtern, das Produktionsverfahren ferner umfassend die folgenden Prozessschritte
a) Nähen der Beutelöffnung durch Anwenden von Kleidungsnähen an einer Kantenfalt- und Nähstation (12) im Anschluss an die Eingabeeinheit (11),
b) Anbringen eines Griffs an dem Beutel, dessen Öffnungsteil an einer Griffvorbereitungs- und -anbringungsstation (13) durch Kleidungsnähen vernäht wird,
c) Kombinieren der Seitenkanten des aus der Formungseinheit (15) austretenden Beutels an der Längsnähstation (16) durch Kleidungsnähen,
d) Formen des aus der Balgbildungsstation (20) austretenden Beutelbodens an einer dreieckigen Schneide- und Nähstation (21), an der die in der Balgbildungsstation (20) geformten Polster in dem Beutelboden durch Kleidungsnähen angebracht werden.

3. Produktionsverfahren nach Anspruch 2, **dadurch gekennzeichnet, dass** das Kleidungsnähen in Schritt (b) in Form einer geraden Naht oder einer Kreuznaht erfolgt.

4. Produktionsverfahren nach Anspruch 2, **dadurch gekennzeichnet, dass** die Polster im Boden des Beutels nach Anwenden des Kleidungsnähens in Schritt (d) mechanisch geschnitten werden.

## Revendications

1. Système de production de sacs (10) à l'aide de coutures façon confection qui comprend une unité d'entrée (11) dans laquelle un rouleau de tissu pour la production de sacs ou de sacoches à soufflets en tissus techniques ou non techniques, tissés ou non tissés, constitués de polypropylène (PP) et de polyéthylène (PE), est introduit ;
un poste de pliage et de couture de bords (12) disposé dans le prolongement de l'unité d'entrée (11) ; un poste de préparation et d'ajustement de poignées (13) ; une unité de formation (15) dans laquelle le sac est formé conformément au modèle souhaité ; un poste de couture de longueurs (16) où la couture est effectuée le long d'une hauteur du sac, ladite hauteur du sac désignant la distance depuis l'ouverture jusqu'au fond ; une unité de coupe de longueurs (18) ; un poste de fabrication de soufflets (20) ; un poste de coupe et de couture triangulaire (21) dans lequel des lamelles situées dans le fond du sac, formées dans le poste de formation de soufflets (20), sont fixées à l'aide de coutures façon confection et découpées, et un poste de repassage et d'empilage (23) pour maintenir la forme du sac et pour réduire son volume lors de l'empilage ; ledit système de production de sacs (10) comprenant des têtes de couture qui sont actionnées et commandées par un système d'automatisation pour système de production de sacs (10)
• au niveau dudit poste de pliage et de couture de bords (12) pour réaliser couture de l'ouverture du sac,
• au niveau dudit poste de préparation et d'ajustement de poignées (13) pour réaliser des coutures d'ajustement de poignées,
• au niveau dudit poste de couture de longueurs (16) pour réaliser des coutures de bords latéraux,
• et au niveau dudit poste de coupe et de couture triangulaire (21) pour former la base du sac afin de réaliser des coutures façon confection.

2. Procédé de production pour la production de sacs ou de sacoches à soufflets en tissus techniques ou non techniques, tissés ou non tissés, constitués de polypropylène (PP) et de polyéthylène (PE), comprenant les étapes de processus d'alimentation du système en plaçant un rouleau de tissu dans une unité d'entrée (11), de formation d'un tissu dans une unité de formation (15) en tirant le tissu pour obtenir une longueur souhaitée de sac ou de sacoche, de formation des soufflets latéraux et inférieurs pour obtenir la taille de sac souhaitée dans un poste de formation de soufflets (20), de formation du sac avec de la chaleur et de la pression dans un poste de repassage et d'empilage (23) pour maintenir la forme du sac et faciliter l'empilage, le procédé de production comprenant en outre les étapes de processus de
a) couture de l'ouverture du sac en appliquant des coutures façon confection au niveau d'un poste de pliage et de couture de bords (12) dans le prolongement de l'unité d'entrée (11),
b) installation d'une poignée sur le sac dont la partie d'ouverture est cousue à l'aide de coutures façon confection au niveau d'un poste de préparation et d'ajustement de poignées (13),
c) combinaison des bords latéraux du sac sortant de l'unité de formation (15) au niveau du poste de couture de longueurs (16) avec des coutures façon confection,
d) formation du fond du sac sortant du poste de formation de soufflets (20) au niveau d'un poste de coupe et de couture triangulaire (21) dans lequel les lamelles situées dans le fond du sac, formées dans le poste de formation de soufflets (20), sont fixées à l'aide de coutures façon confection.

3. Procédé de production selon la revendication 2, **caractérisé en ce que** les coutures façon confection de ladite étape (b) se présente sous la forme d'une couture droite ou d'une couture croisée.

4. Procédé de production selon la revendication 2, **caractérisé en ce que** les lamelles situées dans le fond du sac sont coupées mécaniquement après application des coutures façon confection lors de ladite étape (d).
